# EUROPÄISCHE PATENTSCHRIFT

(11) **EP 2 266 213 B1**
(45) Veröffentlichungstag und Bekanntmachung des Hinweises auf die Patenterteilung: **18.07.2012**
(21) Anmeldenummer: 08873032.0
(22) Anmeldetag: 22.11.2008
(51) Int. Cl.: H04B 5/00

(54) **INDUKTIVE DATENÜBERTRAGUNGSEINRICHTUNG UND ANLAGE**
INDUCTIVE DATA TRANSFER DEVICE AND SYSTEM
DISPOSITIF DE TRANSMISSION DE DONNÉES À INDUCTION, ET INSTALLATION

(30) Priorität: 28.02.2008 DE 102008011582
(43) Veröffentlichungstag der Anmeldung: 29.12.2010
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE)
(86) Internationale Anmeldenummer: PCT/EP2008/009915
(87) Internationale Veröffentlichungsnummer: WO 2009/106109

(56) Entgegenhaltungen:
- EP-A- 1 337 001
- WO-A-2004/090918

## Beschreibung

Die Erfindung betrifft eine Datenübertragungseinrichtung und eine Anlage.

Zur Versorgung von beweglichen Verbrauchern mit Energie werden Fertigungsanlagen mit einem Primärleiter ausgerüstet, der als Primärinduktivität mit einer mit den beweglichen Verbrauchern verbundenen, die Sekundärseite darstellenden pickup-Spule induktiv gekoppelt ist. In den Primärleiter wird ein mittelfrequenter Wechselstrom eingespeist, und die pickup-Spule ist mit einem Resonanzschwingkreis verbunden, dessen Resonanzfrequenz auf die Frequenz des mittelfrequenten Wechselstroms abgestimmt ist. Der Verbraucher entnimmt die von ihm benötigte Leistung aus dem Resonanzschwingkreis, wodurch eine induktive Versorgung des Verbrauchers über einen Kopplungsspalt im cm-Bereich möglich ist. Somit ist eine einfache Führung der Bewegung des Verbrauchers bei bestehender Kopplung, etwa durch ein elektromagnetisches Spurführungssystem, möglich.

Derartige Systeme sind aus der DE 103 60 604 A1. der DE102005022367 A1 und der DE 10 2005 063 345 B3 bekannt.

Häufig besteht der Wunsch, zusätzlich zur Energieversorgung eine Datenkommunikation des Verbrauchers mit weiteren Verbrauchern oder mit einer stationären Einheit über den Primärleiter durchzuführen, wobei die Kommunikationssignale jeweils induktiv in den Primärleiter eingekoppelt und aus diesem ausgekoppelt werden, um die Bewegungsfreiheit der Verbraucher nicht weiter einzuschränken. Hierbei bewirkt die Induktivität der ein- und auskoppelnden Spule jedoch eine Verzerrung der Kommunikationssignale.

Seite 1 WO 2004/090918 A1 offenbart eine Daten über tragungseinrichtung in Kombination mit einem System zur induktiven Leistungs übertragung. EP1 337 001 A1 offenbart eine Kontaktlose Ubertragung von Daten und/oder Energie unter Verwendung mehrerer Kaskadierter Schwing Kreise.

Der Erfindung liegt die Aufgabe zugrunde, eine Anlage mit Mitteln zur Datenübertragung weiterzubilden, wobei die Übertragungsqualität der Datenübertragung verbessert sein soll.

Erfindungsgemäß wird die Aufgabe bei der Datenübertragungseinrichtung nach den in Anspruch 1 angegebenen Merkmalen und bei der Anlage nach den in Anspruch 13 angegebenen Merkmalen gelöst.

Wichtige Merkmale der Erfindung einer Datenübertragungseinrichtung sind, dass eine erste Sekundärinduktivität und eine elektronische Signalquelle vorgesehen sind, wobei die erste Sekundärinduktivität induktiv an eine Primärinduktivität gekoppelt ist, die erste Sekundärinduktivität durch eine erste Kapazität zu einem ersten Reihenschwingkreis ergänzt ist und der erste Reihenschwingkreis mit wenigstens einem Ausgang der Signalquelle verbunden ist, wobei die Datenübertragungseinrichtung wenigstens einen zweiten Reihenschwingkreis mit einer zweiten Sekundärinduktivität und einer zweiten Kapazität hat, der zweite Reihenschwingkreis parallel zu dem ersten Reihenschwingkreis geschaltet ist, die zweite Sekundärinduktivität induktiv an die Primärinduktivität gekoppelt ist und der zweite Reihenschwingkreis mit dem Ausgang den Signalquelle verbunden ist. Primärseite und die Sekundärseite sind in Bezug auf die über die Primärinduktivität erfolgende Energieversorgung definiert. Unter einem Reihenschwingkreis wird allgemein auch die um Innenwiderstände der Induktivitäten und/oder Kapazitäten oder deren, durch äußere Beschaltung festgelegte Äquivalente, ergänzte Hintereinanderschaltung eines vornehmlich kapazitiv wirksamen Bauteils, der Kapazität, und eines vornehmlich induktiv wirksamen Bauteils, der Induktivität, verstanden. Hierbei kann die Sekundärinduktivität auch durch weitere vornehmlich induktiv wirksame Bauteile ergänzt sein, die nicht zur Kopplung an die Primärinduktivität beitragen. Die Sekundärinduktivitäten sind vorzugsweise als Spulen realisiert, deren Wicklungen um ferromagnetische Kerne geführt sind, und die Kapazitäten als Kondensatoren oder Zusammenschaltung von Kondensatoren. Die Signalquelle umfasst vorzugsweise einen Signalgenerator und/oder einen Operationsverstärker. Die Kapazitäten dienen zur Anpassung der Induktivitäten; ohne die entsprechende Kapazität würden parasitäre Kapazitäten mit den Sekundärinduktivitäten sehr hohe Resonanzfrequenzen definieren, die bei den zur Signalübertragung genutzten Frequenzbereichen eine übermäßige Dämpfung bewirken würden. Von Vorteil ist bei der erfindungsgemäßen Datenübertragungseinrichtung, dass die Datenübertragungseinrichtung zwischen Signalquelle und Primärseite unter Einbeziehung der für die Ankopplung verwendeten Sekundärinduktivität ein Filter realisiert, das eine verzerrungsarme Übertragung ermöglicht. Zusätzliche, vor die Sekundärinduktivität geschaltete Filter, beispielsweise Bandpassfilter, sind verzichtbar, wodurch das übertragene Signal nicht unnötig abgeschwächt wird. Durch die Parallelschaltung ist eine gesonderte Anpassung für jede Sekundärinduktivität einzeln vorsehbar.

Eine günstige Einkopplung von Signalen in den Primärleiter über einen erweiterten Frequenzbereich ergibt sich, wenn die Resonanzfrequenz des ersten Reihenschwingkreises verschieden ist von der Resonanzfrequenz des zweiten Reihenschwingkreises. Somit ergänzen sich die jeweiligen Durchlassbereiche der einzelnen Reihenschwingkreise additiv. Die verschiedenen Resonanzfrequenzen sind beispielsweise einstellbar, indem für ein und denselben Spulentyp jeweils die passende Kapazität ausgewählt wird, oder indem die Induktivitätswerte der Sekundärinduktivitäten voneinander differieren und die Kapazitäten entsprechend der gewünschten Resonanzfrequenzen dimensioniert sind.

Vorzugsweise sind sogar drei oder mehr Reihenschwingkreise in Parallelschaltung vorgesehen, wobei die Datenübertragungseinrichtung einen dritten Reihenschwingkreis mit einer dritten Sekundärinduktivität und einer dritten Kapazität hat, der dritte Reihenschwingkreis parallel zu dem ersten Reihenschwingkreis geschaltet ist, der dritte Reihenschwingkreis parallel zu dem zweiten Reihenschwingkreis geschaltet ist und die dritte Sekundärinduktivität induktiv an die Primärinduktivität gekoppelt ist. Ein eventuell vorhandener vierter, fünfter usw. Reihenschwingkreis ist entsprechend verschaltet.

Besonders günstig ist es dabei, wenn jeder Reihenschwingkreis in einem Frequenzband durchlässig ist und die Frequenzbänder einen zusammenhängenden Frequenzbereich bilden. Das Frequenzband eines Reihenschwingkreises, also der Übertragungsbereich, ist dabei derjenige Bereich der Frequenzskala um die Resonanzfrequenz, der zwischen der oberen und der unteren Grenzfrequenz liegt, wobei die Grenzfrequenzen diejenigen Frequenzen sind, bei denen das Signal gegen um 3dB abgeschwächt wird. Die Datenübertragungseinrichtung realisiert somit näherungsweise ein Bandpassverhalten, wobei der Frequenzbereich den Übertragungsbereich des Bandpasses bildet. Durch die Festlegung der Resonanzfrequenzen und der Frequenzbänder zur Bildung eines zusammenhängenden Frequenzbereichs ist somit eine Datenübertragungseinrichtung bereitgestellt, die auf mehreren Frequenzen im Frequenzbereich, den Frequenzkanälen, oder durch Frequenzmodulation Signale übertragen kann. Vorzugsweise hat die Signalquelle Mittel zum Erzeugen von Signalen in dem zusammenhängenden Frequenzbereich. Insbesondere sind somit Mehrkanalträgerverfahren, beispielsweise OFDM-Verfahren gemäß DE 10 2006 010 900 A1, einsetzbar.

Bei einer Ausgestaltung der Erfindung kann vorgesehen sein, dass die Kapazitäten jeweils durch einen ohmschen Widerstand überbrückt sind. Durch diese Parallelschaltung eines ohmschen Widerstands zu der Kapazität wird der Übertragungsbereich verbreitert und somit eine verbesserte Annäherung an ein Bandpassverhalten erreicht. Alternativ oder zusätzlich können die Sekundärinduktivitäten jeweils durch einen ohmschen Widerstand überbrückt sein und/oder einen ferromagnetischen Kern aufweisen, durch den eine Abweichung vom Idealverhalten eines Reihenschwingkreises bewirkt wird, die beispielsweise durch eine Überbrückung mit einem ohmschen Widerstand darstellbar ist. Durch die ohmschen Widerstände ist eine Reduzierung der Welligkeit, also des Grades der Abweichung von einem idealen Bandpassverhalten, erreichbar. Vorzugsweise haben die so gebildeten Reihenschwingkreise eine gleiche Güte, wobei gegenseitige Abweichungen von weniger 15% schon eine für viele Anwendungen ausreichend geringe Welligkeit ergeben.

Eine Ausgestaltung der Erfindung kann vorsehen, dass die Sekundärinduktivitäten um einen gemeinsamen ferromagnetischen Kern gewickelt sind. Vorzugsweise weist der Kern eine U- oder E-Form auf, und die Sekundärinduktivitäten sind als Wicklungen um Bereiche der Schenkel oder des Mittelbalkens ausgeführt ist. Beispielsweise sind drei Sekundärinduktivitäten vorgesehen, indem je eine Sekundärinduktivität als Wicklung um einen Schenkel eines U-förmigen Kerns und eine Sekundärinduktivität als Wicklung um den die Schenkel verbindenden Mittelbalken des U-förmigen Kerns ausgeführt. Besonders günstig ist es dabei, wenn der ferromagnetische Kern von der induktiven Kopplungseinrichtung einer Vorrichtung zur berührungslosen Energieübertragung genutzt wird. Es ist somit ein kompakter Übertragerkopf gebildet, der die Datenübertragungseinrichtung zumindest teilweise umfasst.

Die erfindungsgemäße Datenübertragungseinrichtung ist vorteilhaft einsetzbar, wenn die Primärinduktivität aus einem langgestreckt verlegten Primärleiter gebildet ist oder die Primärinduktivität aus einem in wenigstens einer Windung verlegten Primärleiter gebildet ist. Solche Systeme werden beispielsweise zur berührungslosen Versorgung von beweglichen Verbrauchern mit Energie eingesetzt. Vorzugsweise ist die Datenübertragungseinrichtung gegen den Primärleiter entlang der Verlegerichtung des Primärleiters und somit mit dem Verbraucher oder den Verbrauchern beweglich, wobei die übermittelten Signale zur Ansteuerung von Antriebseinheiten und/oder Aktoren und/oder zur Übermittlung von Sensorsignalen vorgesehen sind. Vorzugsweise erfolgt die Signalübermittlung gemäß einem Busprotokoll, beispielsweise CAN, CANopen, Devicenet, Profibus.

Bei einer vorteilhaften Ausgestaltung kann vorgesehen sein, dass die Signalquelle ein unipolarer Operationsverstärker ist und dass die parallel geschalteten Reihenschwingkreise mit einem Anschluss mit dem Ausgang der Signalquelle und mit dem anderen Anschluss mit dem Masseanschluss der Signalquelle verbunden sind.

Alternativ kann die Signalquelle ein differentieller Operationsverstärker sein, wobei die parallel geschalteten Reihenschwingkreise jeweils mit beiden Anschlüssen mit je einem Ausgang der Signalquelle verbunden sind.

Die Datenübertragungseinrichtung ist besonders vorteilhaft einsetzbar bei Übertragungsverfahren, bei denen der genutzte Frequenzbereich zwischen 700kHz und 2,5MHz liegt. Vorzugsweise sind in diesem Fall drei Reihenschwingkreise parallel geschaltet, wobei die Resonanzfrequenzen der einzelnen Reihenschwingkreise 811 kHz, 1,35MHz und 2MHz betragen. Abweichungen hiervon um 20% oder sogar 30% führen immer noch zu günstigen Ergebnissen.

Bei einer vorteilhaften Ausgestaltung kann vorgesehen sein, dass die Güte der Reihenschwingkreise zwischen 1 und 3 liegt, insbesondere ungefähr 2 beträgt. In diesem Wertebereich haben sich besonders geringe Welligkeiten im Durchlassbereich in Verbindung mit einem ausreichend steilen Abfall der Durchlässigkeit im Bereich der oberen und unteren Grenzfrequenzen ergeben.

Eine vorteilhafte Ausgestaltung kann vorsehen, dass die Signalquelle zum Erzeugen von elektrischen Kommunikationssignalen ausgebildet ist. Insbesondere sind somit Datenbits und Datenwörter, beispielsweise im Rahmen eines Busprotokolls, übertragbar.

Wichtige Merkmale der Erfindung einer Anlage mit wenigstens einem elektrischen Verbraucher, wobei der elektrische Verbraucher eine Sekundärinduktivität hat, die Sekundärinduktivität induktiv an einen Primärleiter gekoppelt ist, die Sekundärinduktivität relativ zum Primärleiter entlang der Verlegerichtung des Primärleiters beweglich ist und die Sekundärinduktivität von einem Resonanzschwingkreis umfasst ist, aus dem der Verbraucher mit elektrischer Leistung versorgbar ist, sind, dass der Verbraucher eine erfindungsgemäße Datenübertragungseinrichtung umfasst und dass die Sekundärinduktivitäten der Datenübertragungseinrichtung induktiv an den Primärleiter gekoppelt sind. Somit ist eine einfach aufgebaute Einrichtung zur Datenübertragung über den zur Energieversorgung vorgesehenen Primärleiter bereitgestellt, wobei die Signaldämpfung und die Signalverzerrung der auf den Primärleiter induktiv eingekoppelten Signale gering sind.

Vorzugsweise ist der Primärleiter von einem Generator mit einem Wechselstrom konstanter Frequenz und konstanter Amplitude beaufschlagt, wobei der Resonanzschwingkreis auf diese konstante Frequenz abgestimmt ist. Durch die Abstimmung der Resonanzfrequenz auf die Frequenz des Wechselstroms ist eine Energieübertragung in schwacher Kopplung durchführbar, die einen hohen Wirkungsgrad selbst bei einer räumlichen Trennung von Primärseite und Sekundärseite im cm-Bereich ermöglicht.

Besonders gute Wirkungsgrade der Energieübertragung werden erreicht, wenn die konstante Frequenz des Wechselstroms im Primärleiter oberhalb 10 kHz und unterhalb 150kHz, vorzugsweise bei 25kHz, liegt.

Eine für viele Anwendungen ausreichende Energieversorgung der beweglichen Verbraucher ist sichergestellt, wenn die konstante Amplitude des Wechselstroms im Primärleiter oberhalb 10A, vorzugsweise oberhalb 50A, liegt. Hierfür ist der Primärleiter vorzugsweise an einen Generator angeschlossen, der einen Wechselstrom konstanter Amplitude in den Primärleiter einprägt.

Eine störungsarme Datenübertragung ergibt sich, wenn der Frequenzbereich der Datenübertragungseinrichtung oberhalb der konstanten Frequenz des Wechselstroms im Primärleiter liegt, insbesondere oberhalb des Vierfachen der Frequenz. Somit ist beispielsweise eine Störung der Datenübertragung durch die Oberschwingungen, insbesondere die ersten zwei Oberschwingungen, des zur Energieversorgung vorgesehenen Wechselstroms weitestgehend ausgeschlossen.

Bei einer vorteilhaften Ausgestaltung hat/haben die Datenübertragungseinrichtung und/oder eine stationäre Datenübertragungseinrichtung Mittel zum Signalempfang im Frequenzbereich der Datenübertragungseinrichtung, die induktiv an den Primärleiter gekoppelt sind.

Ein besonders günstiges Signalempfangsverhalten ergibt sich, wenn die Mittel zum Signalempfang elektrisch getrennt von den Sekundärinduktivitäten der Datenübertragungseinrichtung ausgeführt sind. Vorzugsweise umfassen die Mittel zum Signalempfang eine an den Primärleiter oder die Primärinduktivität gekoppelte Empfangsinduktivität, einen an diese angeschlossenen Bandpassfilter und eine Signalauswertungseinheit. Der Bandpassfilter hat hierbei einen Übertragungsbereich, der mit dem von den Sekundärinduktivitäten gebildeten Frequenzbereich übereinstimmt.

Bei einer vorteilhaften Ausgestaltung umfassen die Mittel zum Signalempfang eine Einrichtung zur Kompensation von Phasenverschiebungen, insbesondere von Phasenverschiebungen von mehr als 90°, zwischen Stromanteil und Spannungsanteil des empfangenen Signals. Diese Phasenverschiebungen werden durch die induktive Einkopplung an der Sekundärinduktivitäten und die kapazitive Ergänzung dieser Sekundärinduktivitäten bewirkt. Vorzugsweise erfolgt die Kompensation der Phasenverschiebung durch eine entsprechende Software im Signalempfangsteil.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

10 Datenübertragungseinrichtung
11 Operationsverstärker
12 Primärleiter
13, 14, 15 Reihenschwingkreis
20 Frequenzachse
21 Dämpfungsachse
22 Welligkeit
23, 24, 25 Frequenzkurve eines Reihenschwingkreises
26 Frequenzkurve der Datenübertragungseinrichtung
L1, L2, L3 Sekundärinduktivität
L4 Primärinduktivität
C1, C2, C3 Kapazität
R1, R2, R3 ohmscher Widerstand
OUT Signalausgang
+,- Signaleingang
1, 2 Spulenanschluss
0 Masse

Die Erfindung wird nun anhand von Abbildungen näher erläutert. Die Erfindung ist jedoch nicht auf das Ausführungsbeispiel beschränkt. Weitere Ausführungsbeispiele ergeben sich durch Kombination der Merkmale der Ansprüche untereinander und/oder mit der Beschreibung.

Es zeigt
- Figur 1 die Prinzipschaltskizze einer erfindungsgemäßen Datenübertragungseinrichtung,
- Figur 2 die Frequenzkurve einer Schaltung gemäß Fig. 1.

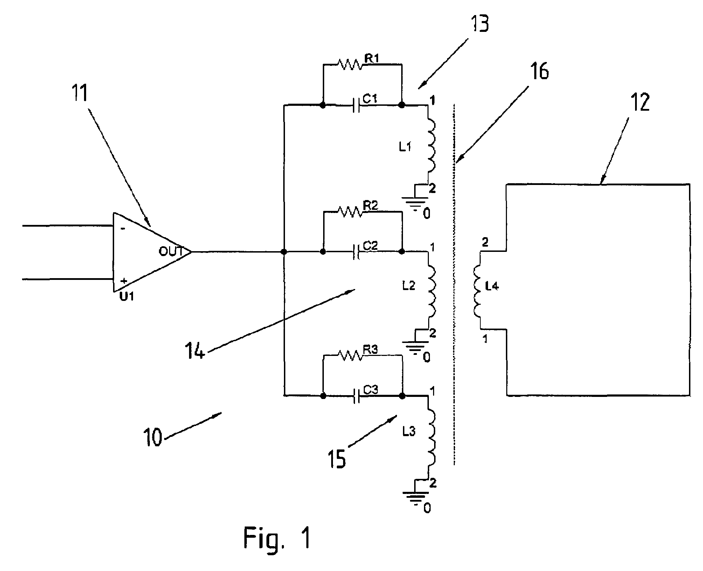

Figur 1 zeigt die Prinzipskizze einer Datenüberragungseinrichtung 1. Die Datenübertragungseinrichtung 10 hat eine erste Sekundärinduktivität L1 und eine als Operationsverstärker 11 ausgebildete elektronische Signalquelle. Die erste Sekundärinduktivität L1 ist induktiv an eine Primärinduktivität L4 eines Primärleiters 12 gekoppelt. Die erste Sekundärinduktivität L1 ist in Reihe geschaltet mit einer ersten Kapazität C1, wodurch ein erster Reihenschwingkreis 13 gebildet ist. Der mit "2" bezeichnete Anschluss der ersten Sekundärinduktivität L1 ist mit der Masse "0" verbunden, während die Kapazität C1 mit dem Ausgang "OUT" des Operationsverstärkers 11 verbunden ist.

Die Datenübertragungseinrichtung 10 hat einen zweiten Reihenschwingkreis 14, der durch die Reihenschaltung einer zweiten Sekundärinduktivität L2 mit einer zweiten Kapazität C2 gebildet wird. Auch die zweite Sekundärinduktivität L2 ist induktiv an die Primärinduktivität L4 des Primärleiters 12 gekoppelt. Der mit "2" bezeichnete Anschluss der zweiten Sekundärinduktivität L2 ist mit der Masse "0" und somit mit dem ebenfalls mit "2" bezeichneten Anschluss der ersten Sekundärinduktivität L1 verbunden, während die zweite Kapazität C2 mit dem Anschluss "OUT" des Operationsverstärker 11 und also mit der ersten Kapazität C1 verbunden ist. Somit ist der zweite Reihenschwingkreis 14 parallel zu dem ersten Reihenschwingkreis 13 geschaltet.

Die Datenübertragungseinrichtung 10 hat schließlich einen dritten Reihenschwingkreis 15, der durch die Reihenschaltung einer dritten Sekundärinduktivität L3 mit einer dritten Kapazität C4 gebildet wird. Auch die dritte Sekundärinduktivität L3 ist induktiv an die Primärinduktivität L4 des Primärleiters 12 gekoppelt. Der mit "2" bezeichnete Anschluss der dritten Sekundärinduktivität L3 ist mit der Masse "0" und somit mit den ebenfalls mit "2" bezeichneten Anschlüssen der ersten und zweiten Sekundärinduktivität L1 bzw. L2 verbunden, während die dritte Kapazität C4 mit dem Anschluss "OUT" des Operationsverstärker 11 und also mit den ersten und zweiten Kapazitäten C1 bzw. C2 verbunden ist. Somit ist der dritte Reihenschwingkreis 15 parallel zu dem ersten und dem zweiten Reihenschwingkreis 13 bzw. 14 geschaltet.

Die Masse "0" ist mit dem nicht dargestellten Masseanschluss des Operationsverstärkers 11 verbunden.

Die Sekundärinduktivitäten 13, 14 und 15 sind untereinander gleichsinnig und gegenüber der Primärinduktivität gegensinnig gewickelt, wie durch die Anschlusskennzeichnung "1" bzw. "2" dargestellt wird.

Durch die Kenngrößen L1 und C1 ist eine Resonanzfrequenz des ersten Reihenschwingkreises 13 ausgezeichnet, ebenso durch L2, C2 bezüglich des zweiten Reihenschwingkreises 14 und durch L3, C3 bezüglich des dritten Reihenschwingkreises 15. Diese Resonanzfrequenzen sind voneinander verschieden. Die Resonanzfrequenzen sind so gewählt, dass sich die Durchlassbereiche, also die Übertragungsbereiche der Reihenschwingkreise 13, 14 bzw. 15, zur Bildung eines zusammenhängenden Frequenzbereichs teilweise überlappen bzw. aneinander grenzen.

Der Operationsverstärker 11 weist zwei Eingänge "+" und "-" auf, über die ein Ansteuerungssignal eingespeist wird zur Erzeugung von Signalen am Ausgang "OUT". Vorzugsweise sind diese Eingänge mit einer Signalverarbeitungseinheit und/oder einem Mikrochip verbunden. Durch die Signalverarbeitungseinheit und/oder den Mikrochip wird der Operationsverstärker 11 derart angesteuert, dass in Abhängigkeit von der auf den Primärleiter 12 zu übertragenden Information am Ausgang "OUT" des Operationsverstärkers 11 Signale im durch die Übertragungsbereiche der Reihenschwingkreise 13, 14, und 15 gebildeten Frequenzbereich generiert werden.

Die Signalverarbeitungseinheit und/oder der Mikrochip sind einem oder mehreren gemeinsam beweglichen Verbrauchern zugeordnet. Die mit der Datenübertragungseinrichtung 10 auf den Primärleiter 12 übertragenen Signale transportieren Informationen an weitere, an den Primärleiter 12 angeschlossene stationäre oder bewegliche Verbraucher, wobei die Informationen beispielsweise Statusmeldungen, Sensorsignale und/oder Bestätigungsrückmeldungen über ausgeführte Aktionen und/oder allgemeine in einem Busprotokoll anfallende Meldungen umfassen. Der Primärleiter 12 dient somit als Übertragungsmedium eines Bussystems zur Kommunikation, neben seiner Funktion als Übertragungsmedium eines Bussystems zur Energieversorgung. Die Kommunikationsteilnehmer sind an diese Übertragungsmedium sowohl zur Kommunikation als auch zur Leistungsentnahme wie beschrieben induktiv gekoppelt, also berührungslos angeschlossen.

Der Primärleiter 12 ist bei einer Sorte Ausführungsbeispielen als langgestreckter Primärleiter ausgebildet, der über eine Strecke von wenigstens 50m, sogar oft mehr als 100m verlegt ist. Der Primärleiter 12 ist hierbei an einen Wechselstrom-Generator angeschlossen, der einen Wechselstrom mit 25kHz und konstanter Amplitude von 60A einspeist, und die Primärinduktivität wird durch eine Schleife aus einem Hinleiter und einem Rückleiter gebildet, die im Abstand von ungefähr 10cm verlaufen und an ihrem vom Generator abgewandten Ende elektrisch verbunden sind, beispielsweise durch ein Bandpassfilter, dass auf 25kHz abgestimmt ist.

Der Primärleiter 12 ist bei einer weiteren Sorte Ausführungsbeispielen zumindest abschnittsweise als Spule mit mehreren Windungen, beispielsweise 5 Windungen oder mehr, und kreisförmigem Querschnitt, beispielsweise gemäß der DE 10 2005 063 345 B3, Figuren 1a bis 3, ausgebildet.

In jedem Fall ist die dem beweglichen Verbraucher oder der Gruppe von gemeinsam beweglichen Verbrauchern zugeordneten Datenübertragungseinrichtung 2 gemeinsam mit den Verbrauchern entlang der Verlegerichtung des Primärleiters, also entlang einer im Wesentlichen linearen Bewegung oder einer Kreisbewegung verschiebbar und wird mit dem Verbraucher mitgeführt.

Zur Verbreiterung der Durchlassbereiche, also Frequenzbänder, der einzelnen Reihenschwingkreise 13, 14 bzw. 15 in Figur 1 sind jeweils parallel zur den Kapazitäten C1, C2, C3 ohmsche Widerstände R1, R2 bzw. R3 geschaltet, die die Kapazitäten C1, C2 bzw. C3 überbrücken.

Zur Verstärkung der Kopplung zwischen Primärinduktivität L4 einerseits und Sekundärinduktivitäten L1, L2 bzw. L3 andererseits ist ein ferromagnetischer Kern 16 vorgesehen, auf den die Wicklungen der Sekundärinduktivitäten L1, L2 bzw. L3 aufgewickelt sind und der entlang des Primärleites 12 verschiebbar ist.

Dieser Kern 16 ist in weiteren Ausführungsbeispielen aus separaten Kern-Teilen gebildet, die jeweils nur eine Sekundärinduktivität L1, L2 bzw. L3 tragen, die unabhängig von den anderen Sekundärinduktivitäten L1, L2 bzw. L3 an die Primärinduktivität L4 induktiv gekoppelt ist.

Das Operationsverstärker 11 ist als unipolarer Operationsverstärker, also mit einem Ausgang "OUT" ausgebildet, und die Sekundärinduktivitäten 13, 14 und 15 sind jeweils elektrisch zwischen dem Ausgang "OUT" und der Masse "0", die mit dem Masseanschluss des Operationsverstärkers 11 verbunden ist, angeordnet. Die Ausgangssignale des Operationsverstärkers 11 fließen damit über die Sekundärinduktivitäten 13, 14, 15 und werden somit induktiv in den Primärleiter 12 eingekoppelt.

In einem weiteren Ausführungsbeispiel ist der Operationsverstärker 11 als differentieller Operationsverstärker ausgebildet, hat also zwei Ausgänge, zwischen denen die durch das Eingangssignal gesteuerte Ausgangsspannung anliegt, und die Sekundärinduktivitäten 13, 14 bzw. 15 sind elektrisch zwischen diesen Ausgängen angeordnet.

Im Ausführungsbeispiel gemäß Figur 1 ist der für die Datenübertragung genutzte Bereich der Frequenzbereich zwischen 700kHz und 2,5Mhz, während der zur Energieversorgung auf den Primärleiter 12 aufgeprägte Wechselstrom eine Frequenz von ungefähr 25kHz hat.

Die Reihenschwingkreise 13, 14 bzw. 15 haben Resonanzfrequenzen bei 811 kHz, 1,35 MHz bzw. 2 MHz, wobei die Induktivitäten, Kapazitäten und Widerstände wie folgt gewählt sind: L1=50µH, C1=550pF, R1=3kΩ, L2=25µH, C2=200pF, R2=500Ω, L3=10µH, C3=90pF, R3=500Ω. Die durch den in einer Schleife verlegten Primärleiter 12 gebildete Induktivität beträgt L4=500nH oder weniger. Bei diesen Werten ergibt sich eine Güte der Reihenschwingkreise von ungefähr 2.

Weitere Versuche haben ergeben, dass eine Abänderung der Induktivitäten, Kapazitäten und Widerstände zur Realisierung von Güten zwischen 1 und 3 eine für die Signalübertragung bereits ausreichend geringe Welligkeit der Frequenzkurve und somit eine ausreichend gute Näherung eines Bandpassverhaltens ergibt.

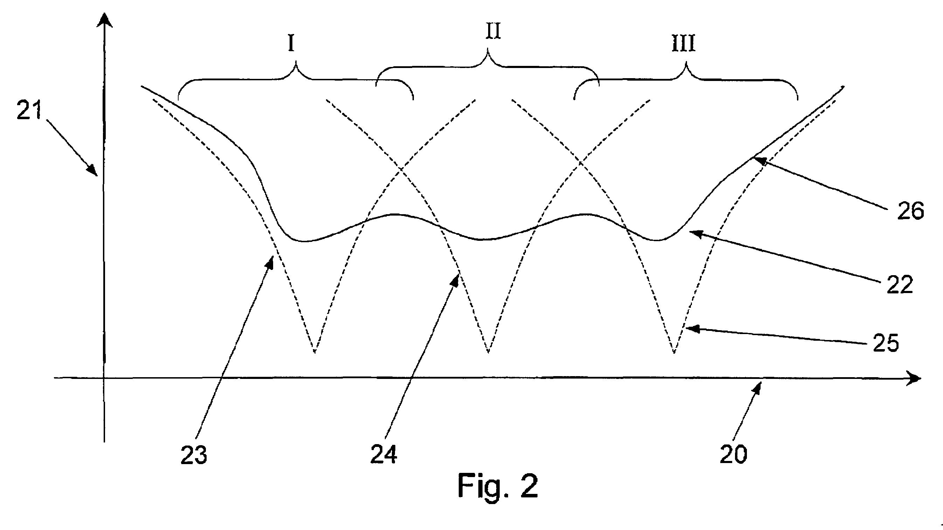

Das Frequenzverhalten der wie beschrieben dimensionierten Schaltung gemäß Figur 1 zeigt in einer nicht maßstäblichen Prinzipskizze Figur 2. Dargestellt ist auf der Ordinate 21 die Dämpfung des an den Sekundärinduktivitäten L1, L2 und L3 induktiv abgreifbaren Signals in Abhängigkeit von der auf der Abszisse 20 aufgetragenen Frequenz. Die drei Reihenschwingkreise 13, 14 bzw. 15 weisen in jeweils einem durch "I", "II" bzw. "III" bezeichneten und mit geschweiften Klammern angedeuteten Frequenzband die typische, gestrichelt eingetragene Frequenzkurve 23, 24 bzw. 25 eines Resonanzkreises auf. Diese Frequenzkurven sind gegeneinander verschoben, wobei sich die Frequenzbänder wie dargestellt teilweise überlappen, so dass sich insgesamt in der Überlagerung ein Frequenzverhalten gemäß der durchgezogenen Linie 26 ergibt. Diese Frequenzkurve 26 nähert das Verhalten eines Bandpassfilters, wobei im Durchlassbereich eine Welligkeit 22 vorhanden ist.

Der Datenübertragungseinrichtung 10 ist eine nicht weiter dargestellte Datenempfangseinrichtung beigeordnet, die ebenfalls induktiv an den Primärleiter 12 angekoppelt ist und aus diesem Signale im Frequenzbereich, also addierten Durchlassbereich der Reihenschwingkreise 13, 14 und 15, der Datenübertragungseinrichtung 10 empfängt. Diese Signale werden durch ein Bandpassfilter geleitet, um Störungen und den zur Energieversorgung dienenden Wechselstrom auszufiltern, wobei die Dämpfung des Signals empfangsseitig durch das Bandpassfilter nur eine geringe Funktionsbeeinträchtigung darstellt. Die Verschaltung ist beispielsweise gemäß DE 10 349 242 B3, Figur 3 ausgeführt. Die so empfangenen Signale werden an die Signalverarbeitungseinheit und/oder den Mikrochip zur Auswertung weitergeleitet. Hierbei wird eine Phasenverschiebung der Strom- und Spannungssignale gegeneinander bestimmt und kompensiert. Somit ist der zugeordnete, bewegliche Verbraucher mit Mitteln ausgerüstet, die ihn als vollwertigen Kommunikationsteilnehmer ausrüsten.

Bei einem Ausführungsbeispiel sind die Sekundärinduktivitäten 13, 14, und 15, die Induktivität der Datenempfangseinrichtung und die pickup-Spule zur Leistungsversorgung in einem Übertragerkopf integriert und gemäß der anhängigen deutschen Patentanmeldung Nummer 10 2007 032 643, Figur 2 oder 3 und/oder gemäß Figur 4 ausgebildet.

Die Erfindung betrifft eine Anlage mit berührungslos induktiv aus einem Primärleiter versorgten Verbrauchern, wobei den Verbrauchern Datenübertragungseinrichtungen zur Einkopplung von Kommunikationssignale auf den Primärleiter zugeordnet sind und jede dieser Datenübertragungseinheiten wenigstens zwei parallel geschaltete Reihenschwingkreise umfasst, deren Induktivitäten zumindest teilweise zur Einkopplung der Kommunikationssignale verwendbar sind.

## Patentansprüche

1. Datenübertragungseinrichtung (10)
mit einer ersten Sekundärinduktivität (L1)
und einer elektronischen Signalquelle,
wobei die erste Sekundärinduktivität (L1) induktiv an eine Primärinduktivität (L4) gekoppelt ist,
die erste Sekundärinduktivität (L1) durch eine erste Kapazität (C1) zu einem ersten Reihenschwingkreis (13) ergänzt ist
und der erste Reihenschwingkreis (13) mit wenigstens einem Ausgang der Signalquelle verbunden ist,
**dadurch gekennzeichnet, dass**
dass die Datenübertragungseinrichtung (10) wenigstens einen zweiten Reihenschwingkreis (14) mit einer zweiten Sekundärinduktivität (L2) und einer zweiten Kapazität (C2) hat,
dass der zweite Reihenschwingkreis (14) parallel zu dem ersten Reihenschwingkreis (13) geschaltet ist,
dass die zweite Sekundärinduktivität (L2) induktiv an die Primärinduktivität (L4) gekoppelt ist
und dass der zweite Reihenschwingkreis (14) mit dem Ausgang der Signalquelle verbunden ist.

2. Datenübertragungseinrichtung nach Anspruch 1,
**dadurch gekennzeichnet, dass**
die Resonanzfrequenz des ersten Reihenschwingkreises verschieden ist von der Resonanzfrequenz des zweiten Reihenschwingkreises.

3. Datenübertragungseinrichtung nach einem der vorangegangenen Ansprüche,
**dadurch gekennzeichnet, dass**
die Datenübertragungseinrichtung einen dritten Reihenschwingkreis (15) mit einer dritten Sekundärinduktivität (L3) und einer dritten Kapazität (L3) v (C3) hat,
dass der dritte Reihenschwingkreis parallel zu dem ersten Reihenschwingkreis geschaltet ist,
dass der dritte Reihenschwingkreis parallel zu dem zweiten Reihenschwingkreis geschaltet ist
und dass die dritte Sekundärinduktivität induktiv an die Primärinduktivität gekoppelt ist.

4. Datenübertragungseinrichtung nach einem der vorangegangenen Ansprüche,
**dadurch gekennzeichnet, dass**
jeder Reihenschwingkreis in einem Frequenzband durchlässig ist und dass die Frequenzbänder einen zusammenhängenden Frequenzbereich bilden.

5. Datenübertragungseinrichtung nach einem der vorangegangenen Ansprüche,
**dadurch gekennzeichnet, dass**
die Signalquelle Mittel zum Erzeugen von Signalen in dem zusammenhängenden Frequenzbereich hat.

6. Datenübertragungseinrichtung nach einem der vorangegangenen Ansprüche,
**dadurch gekennzeichnet, dass**
die Kapazitäten jeweils durch einen ohmschen Widerstand (R1, R2, R3) überbrückt sind.

7. Datenübertragungseinrichtung nach einem der vorangegangenen Ansprüche,
**dadurch gekennzeichnet, dass**
die Reihenschwingkreise eine gleiche Güte haben,
und/oder dass
die Sekundärinduktivitäten um einen gemeinsamen ferromagnetischen Kerr (16) gewickelt sind, und/oder dass
die Primärinduktivität aus einem langgestreckt verlegten Primärleiter (12) gebildet ist,
und/oder dass
die Primärinduktivität aus einem in wenigstens einer Windung verlegten Primärleiter (12) gebildet ist,
und/oder dass
die Datenübertragungseinrichtung gegen einen Primärleiter (12) entlang der Verlegerichtung des Primärleiters beweglich ist.

8. Datenübertragungseinrichtung nach einem der vorangegangenen Ansprüche,
**dadurch gekennzeichnet, dass**
die Signalquelle ein unipolarer Operationsverstärker ist
und dass die parallel geschalteten Reihenschwingkreise mit einem Anschluss mit dem Ausgang der Signalquelle und mit dem anderen Anschluss mit dem Masseanschluss der Signalquelle verbunden sind.

9. Datenübertragungseinrichtung nach einem der Ansprüche 1 bis 7,
**dadurch gekennzeichnet, dass**
die Signalquelle ein differentieller Operationsverstärker ist
und dass die parallel geschalteten Reihenschwingkreise jeweils mit beiden Anschlüssen mit je einem Ausgang der Signalquelle verbunden sind.

10. Datenübertragungseinrichtung nach einem der vorangegangenen Ansprüche,
**dadurch gekennzeichnet, dass**
der Frequenzbereich zwischen 700kHz und 2,5MHz liegt,
und/oder dass
drei Reihenschwingkreise parallel geschaltet sind und dass die Resonanzfrequenzen der einzelnen Reihenschwingkreise 811 kHz, 1,35MHz und 2MHz betragen.

11. Datenübertragungseinrichtung nach einem der vorangegangenen Ansprüche,
**dadurch gekennzeichnet, dass**
die Güte der Reihenschwingkreise zwischen 1 und 3 liegt.

12. Datenübertragungseinrichtung nach einem der vorangegangenen Ansprüche,
**dadurch gekennzeichnet, dass**
die Signalquelle zum Erzeugen von elektrischen Kommunikationssignalen ausgebildet ist.

13. Anlage mit wenigstens einem elektrischen Verbraucher,
wobei der elektrische Verbraucher eine Sekundärinduktivität hat,
die Sekundärinduktivität induktiv an einen Primärleiter gekoppelt ist,
die Sekundärinduktivität relativ zum Primärleiter entlang der Verlegerichtung des Primärleiters beweglich ist
und die Sekundärinduktivität von einem Resonanzschwingkreis umfasst ist, aus dem der Verbraucher mit elektrischer Leistung versorgbar ist,
**dadurch gekennzeichnet, dass**
der Verbraucher eine Datenübertragungseinrichtung nach einem der vorangegangenen Ansprüche umfasst
und dass die Sekundärinduktivitäten der Datenübertragungseinrichtung induktiv an den Primärleiter gekoppelt sind.

14. Anlage nach Anspruch 13,
**dadurch gekennzeichnet, dass**
der Primärleiter von einem Generator mit einem Wechselstrom konstanter Frequenz und konstanter Amplitude beaufschlagt ist und
dass der Resonanzschwingkreis auf diese konstante Frequenz abgestimmt ist,
und/oder dass
die konstante Frequenz des Wechselstroms im Primärleiter unterhalb 150kHz, vorzugsweise bei 25kHz, liegt,
und/oder dass
die konstante Amplitude des Wechselstroms im Primärleiter oberhalb 10A, vorzugsweise oberhalb 50A, liegt,
und/oder dass
der Frequenzbereich der Datenübertragungseinrichtung oberhalb der konstanten Frequenz des Wechselstroms im Primärleiter liegt, insbesondere oberhalb des Vierfachen der Frequenz,
und oder dass
die Datenübertragungseinrichtung und/oder eine stationäre Datenübertragungseinrichtung Mittel zum Signalempfang im Frequenzbereich der Datenübertragungseinrichtung hat/haben, die induktiv an den Primärleiter gekoppelt sind.

15. Anlage nach einem der Ansprüche 13 oder 14,
**dadurch gekennzeichnet, dass**
die Mittel zum Signalempfang elektrisch getrennt von den Sekundärinduktivitäten der Datenübertragungseinrichtung ausgeführt sind,
und/oder dass
die Mittel zum Signalempfang eine Einrichtung zur Kompensation von Phasenverschiebungen, insbesondere von Phasenverschiebungen von mehr als 90°, zwischen Stromanteil und Spannungsanteil des empfangenen Signals umfassen.

## Claims

1. Data transmission device (10)
with a first secondary inductor (L1) and an electronic signal source,
the first secondary inductor (L1) being inductively coupled to a primary inductor (L4),
the first secondary inductor (L1) being complemented by a first capacitor (C1) to form a first series resonant circuit (13)
and the first series resonant circuit (13) being connected to at least one output of the signal source,
**characterised in that**
the data transmission device (10) has at least one second series resonant circuit (14) with a second secondary inductor (L2) and a second capacitor (C2),
**in that** the second series resonant circuit (14) is connected in parallel with the first series resonant circuit (13),
**in that** the second secondary inductor (L2) is inductively coupled to the primary inductor (L4)
and **in that** the second series resonant circuit (14) is connected to the output of the signal source.

2. Data transmission device according to claim 1,
**characterised in that**
the resonant frequency of the first series resonant circuit is different from the resonant frequency of the second series resonant circuit.

3. Data transmission device according to one of the preceding claims,
**characterised in that**
the data transmission device has a third series resonant circuit (15) with a third secondary inductor (L3) and a third capacitor (C3),
**in that** the third series resonant circuit is connected in parallel with the first series resonant circuit,
**in that** the third series resonant circuit is connected in parallel with the second series resonant circuit
and **in that** the third secondary inductor is inductively coupled to the primary inductor.

4. Data transmission device according to one of the preceding claims,
**characterised in that**
each series resonant circuit transmits in one frequency band and **in that** the frequency bands form a continuous frequency range.

5. Data transmission device according to one of the preceding claims,
**characterised in that**
the signal source has means for generating signals in the continuous frequency range.

6. Data transmission device according to one of the preceding claims,
**characterised in that**
the capacitors are each bridged by an ohmic resistor (R1, R2, R3).

7. Data transmission device according to one of the preceding claims,
**characterised in that**
the series resonant circuits have the same quality factor,
and/or **in that**
the secondary inductors are wound around a common ferromagnetic core (16),
and/or **in that**
the primary inductor is formed from a primary conductor (12) laid in a long stretched-out manner,
and/or **in that**
the primary inductor is formed from a primary conductor (12) laid in at least one turn,
and/or **in that**
the data transmission device is movable relative to a primary conductor (12) along the laying direction of the primary conductor.

8. Data transmission device according to one of the preceding claims,
**characterised in that**
the signal source is a unipolar operational amplifier and **in that** the series resonant circuits connected in parallel are connected by one terminal to the output of the signal source and by the other terminal to the earth connection of the signal source.

9. Data transmission device according to one Claims 1 to 7,
**characterised in that**
the signal source is a differential operational amplifier and **in that** the series resonant circuits connected in parallel are each connected by both terminals to respectively one output of the signal source.

10. Data transmission device according to one of the preceding claims,
**characterised in that**
the frequency range lies between 700 kHz and 2.5 MHz, and/or **in that**
three series resonant circuits are connected in parallel and **in that** the resonant frequencies of the individual series resonant circuits are 811 kHz, 1,35 MHz and 2 MHz.

11. Data transmission device according to one of the preceding claims,
**characterised in that**
the quality factor of the series resonant circuits lies between 1 and 3.

12. Data transmission device according to one of the preceding claims,
**characterised in that**
the signal source is designed to generate electrical communication signals.

13. System with at least one electrical load,
the electrical load having a secondary inductor,
the secondary inductor being inductively coupled to a primary conductor,
the secondary inductor being movable relative to the primary conductor along the laying direction of the primary conductor
and the secondary inductor comprising a resonant circuit, from which the load can be supplied with electric power,
**characterised in that**
the load comprises a data transmission device according to one of the preceding claims
and **in that** the secondary inductors of the data transmission device are inductively coupled to the primary conductor.

14. System according to Claim 13,
**characterised in that**
the primary conductor is supplied with an alternating current of constant frequency and constant amplitude by a generator and
**in that** the resonant circuit is tuned to this constant frequency,
and/or **in that**
the constant frequency of the alternating current in the primary conductor is below 150 kHz, and is preferably 25 kHz,
and/or **in that**
the constant amplitude of the alternating current in the primary conductor is above 10 A, preferably above 50 A, and/or **in that**
the frequency range of the data transmission device is above the constant frequency of the alternating current in the primary conductor, in particular above four-times the frequency,
and/or **in that**
the data transmission device and/or a stationary data transmission device has/have means for signal reception in the frequency range of the data transmission device which are inductively coupled to the primary conductor.

15. System according to one of Claims 13 and 14,
**characterised in that**
the means for signal reception are designed in a manner electrically isolated from the secondary inductors of the data transmission device,
and/or **in that**
the means for signal reception comprise a device for compensation of phase displacements, in particular phase displacements of more than 90°, between the current component and the voltage component of the received signal.

## Revendications

1. Dispositif de transmission de données (10)
comportant une première inductance secondaire (L1) et une source de signaux électroniques,
la première inductance secondaire (L1) étant couplée inductivement à une inductance primaire (L4),
la première inductance secondaire (L1) étant complétée par une première capacité (C1) pour former un premier circuit résonnant série (13)
et le premier circuit résonnant série (13) étant relié à au moins une sortie de la source de signaux,
**caractérisé en ce**
**que** le dispositif de transmission de données (10) comprend au moins un deuxième circuit résonnant série (14) avec une deuxième inductance secondaire (L2) et une deuxième capacité (C2),
**que** le deuxième circuit résonnant série (14) est branché en parallèle sur le premier circuit résonnant série (13),
**que** la deuxième inductance secondaire (L2) est couplée inductivement à l'inductance primaire (L4)
et **que** le deuxième circuit résonnant série (14) est relié à la sortie de la source de signaux.

2. Dispositif de transmission de données selon la revendication 1,
**caractérisé en ce que**
la fréquence de résonance du premier circuit résonnant série est différente de la fréquence de résonance du deuxième circuit résonnant série.

3. Dispositif de transmission de données selon une des revendications précédentes,
**caractérisé en ce que**
le dispositif de transmission de données comprend un troisième circuit résonnant série (15) avec une troisième inductance secondaire (L3) et une troisième capacité (C3),
que le troisième circuit résonnant série est branché en parallèle sur le premier circuit résonnant série,
que le troisième circuit résonnant série est branché en parallèle sur le deuxième circuit résonnant série
et que la troisième inductance secondaire est couplée inductivement à l'inductance primaire.

4. Dispositif de transmission de données selon une des revendications précédentes,
**caractérisé en ce que**
chaque circuit résonnant série est transparent dans une bande de fréquences et que les bandes de fréquences forment une gamme de fréquences continue.

5. Dispositif de transmission de données selon une des revendications précédentes,
**caractérisé en ce que**
la source de signaux comprend des moyens pour générer des signaux dans la gamme de fréquences continue.

6. Dispositif de transmission de données selon une des revendications précédentes,
**caractérisé en ce que**
les capacités sont chaque fois pontées par une résistance ohmique (R1, R2, R3).

7. Dispositif de transmission de données selon une des revendications précédentes,
**caractérisé en ce que**
les circuits résonnants série ont une qualité égale,
et/ou que
les inductances secondaires sont bobinées autour d'un noyau ferromagnétique commun (16),
et/ou que
l'inductance primaire est formée d'un conducteur primaire (12) posé en longueur,
et/ou que
l'inductance primaire est formée d'un conducteur primaire (12) posé en au moins une spire,
et/ou que
le dispositif de transmission de données est mobile par rapport à un conducteur primaire (12) le long de la direction de pose du conducteur primaire.

8. Dispositif de transmission de données selon une des revendications précédentes,
**caractérisé en ce que**
la source de signaux est un amplificateur opérationnel unipolaire
et que les circuits résonnants série branchés en parallèle sont reliés par une connexion à la sortie de la source de signaux et par l'autre connexion à la connexion de masse de la source de signaux.

9. Dispositif de transmission de données selon une des revendications 1 à 7,
**caractérisé en ce que**
la source de signaux est un amplificateur opérationnel différentiel
et que les circuits résonnants série branchés en parallèle sont chacun reliés chaque fois par les deux connexions à une sortie de la source de signaux.

10. Dispositif de transmission de données selon une des revendications précédentes,
**caractérisé en ce que**
la gamme de fréquences est comprise entre 700 kHz et 2,5 MHz,
et/ou que
trois circuits résonnants série sont branchés en parallèle et que les fréquences de résonance des différents circuits résonnants série sont de 811 kHz, 1,35 MHz et 2 MHz.

11. Dispositif de transmission de données selon une des revendications précédentes,
**caractérisé en ce que**
la qualité des circuits résonnants série est comprise entre 1 et 3.

12. Dispositif de transmission de données selon une des revendications précédentes,
**caractérisé en ce que**
la source de signaux est conçue pour générer des signaux électriques de communication.

13. Installation comportant au moins un consommateur électrique,
le consommateur électrique comprenant une inductance secondaire,
l'inductance secondaire étant couplée inductivement à un conducteur primaire,
l'inductance secondaire étant mobile par rapport au conducteur primaire le long de la direction de pose du conducteur primaire
et l'inductance secondaire faisant partie d'un circuit résonnant à partir duquel le consommateur peut être alimenté en puissance électrique,
**caractérisée en ce que**
le consommateur comprend un dispositif de transmission de données selon une des revendications précédentes
et que les inductances secondaires du dispositif de transmission de données sont couplées inductivement au conducteur primaire.

14. Installation selon la revendication 13,
**caractérisée en ce que**
le conducteur primaire est soumis par un générateur à un courant alternatif de fréquence constante et d'amplitude constante et
que le circuit résonnant est accordé sur cette fréquence constante,
et/ou que
la fréquence constante du courant alternatif dans le conducteur primaire est inférieure à 150 kHz, de préférence égale à 25 KHz,
et/ou que
l'amplitude constante du courant alternatif dans le conducteur primaire est supérieure à 10 A, de préférence supérieure à 50 A,
et/ou que
la gamme de fréquences du dispositif de transmission de données est supérieure à la fréquence constante du courant alternatif dans le conducteur primaire, en particulier supérieure au quadruple de la fréquence,
et/ou que
le dispositif de transmission de données et/ou un dispositif de transmission de données stationnaire comprend/comprennent des moyens de réception de signaux dans la gamme de fréquences du dispositif de transmission de données, lesquels sont couplés inductivement au conducteur primaire.

15. Installation selon une des revendications 13 ou 14,
**caractérisée en ce que**
les moyens de réception de signaux sont réalisés de manière séparée électriquement des inductances secondaires du dispositif de transmission de données,
et/ou que
les moyens de réception de signaux comprennent un dispositif de compensation des déphasages, en particulier des déphasages de plus de 90°, entre composante de courant et composante de tension du signal reçu.
